# EUROPÄISCHE PATENTANMELDUNG

(11) **EP 1 104 727 A2**
(43) Veröffentlichungstag der Anmeldung: **06.06.2001**
(21) Anmeldenummer: 00123467.3
(22) Anmeldetag: 07.11.2000
(51) Int. Cl.: B60R 21/34

(54) **Sicherheitsanordnung an einem Fahrzeug zum Schutz von Fussgängern**

(30) Priorität: 01.12.1999 DE 19957871
(71) Anmelder: Volkswagen Aktiengesellschaft, 38436 Wolfsburg (DE)
(72) Erfinder: Gevers, Dennis, 38106 Braunschweig (DE); Sinnhuber, Ruprecht, Dipl.-Ing., 38518 Gifhorn (DE)

(57) **Zusammenfassung**

Die Erfindung betrifft eine Sicherheitseinrichtung (1; 20; 33; 45) an einem Fahrzeug zum Schutz von Fußgängern mit einer Mehrgelenksanordnung (2) als Scharnieranordnung für eine Fronthaube (3) des Fahrzeugs, wobei die Mehrgelenksanordnung (2) wenigstens zwei Gelenkarme (4, 5) aufweist, die jeweils mit einer fronthaubenseitigen Anlenkstelle (6, 7) an einem fronthaubenseitigen Scharnierteil (8) und mit einer karosserieseitigen Anlenkstelle (9, 10) an einem karosserieseitigen Scharnierteil (11) angelenkt sind. Erfindungsgemäß ist wenigstens eine der fronthaubenseitigen und/oder karosserieseitigen Anlenkstellen (6, 7, 9, 10) mit einem Deformationselement (12; 21; 25; 29) gekoppelt, so dass die Fronthaube (3) bei einem Fußgängeraupfrall relativ zur Fahrzeugkarosserie unter Energieabsorption durch das Deformationselement (12; 21; 25; 29) mit gezielter Kraft-/Weg-Kennung nach unten absenkbar ist.

## Beschreibung

Die Erfindung betrifft eine Sicherheitseinrichtung an einem Fahrzeug zum Schutz von Fußgängern nach dem Oberbegriff des Anspruchs 1.

Es sind bereits eine Reihe von derartigen im Fronthaubenbereich von Fahrzeugen, insbesondere von Personenkraftfahrzeugen, vorgesehenen Sicherheitseinrichtungen bekannt, die bei einer Kollision des Fahrzeugs mit einem Fußgänger eine mögliche Beeinträchtigung des Fußgängers reduzieren sollen.

So ist beispielsweise aus der JP 009 031 5266 und der DE 197 10 417 A1 jeweils eine Sicherheitseinrichtung bekannt, bei der eine Fronthaube bei einer drohenden oder erfolgten Kollision mit einem Fußgänger aus einer Fronthauben-Ruheposition in eine dieser gegenüber angehobene Fronthauben-Aufprallposition angehoben wird. Dazu wird eine im hinteren Vorderwagenbereich angeordnete Scharnieranordnung der Fronthaube mittels einer Zylinder-Kolben-Einheit angehoben, wodurch die Fronthaube um eine horizontale Drehachse im Frontbereich des Fahrzeugs verschwenkt wird, so dass die Fronthaube im hinteren Vorderwagenbereich aus einer Fronthauben-Ruheposition in eine Fronthauben-Aufprallposition angehoben wird. Zwar wird dadurch der Abstand der deformierbaren und dabei energieabsorbierenden Fronthaube zu darunterliegenden, nicht deformierbaren Fahrzeugteilen, wie z.B. einer Brennkraftmaschine, erhöht, so dass ein insgesamt größerer Verformungsweg zur Verfügung steht, nachteilig hierbei ist jedoch, dass keine Energieabsorption mit einer gezielten Kraft-/Weg-Kennung möglich ist. Dadurch kann auch kein bestimmtes Beschleunigungs-Zeit-Verhalten für den aufprallenden Fußgänger aufgrund der fehlenden gezielten Krafteinleitung und - umleitung im Rahmen der Energieabsorption erzielt werden, wie dies für eine gezielte Energieabsorption erforderlich ist.

Aus der gattungsgemäßen DE 197 12 961 A1 ist eine Sicherheitseinrichtung an einem Fahrzeug zum Schutz von Fußgängern bekannt, die eine Mehrgelenksanordnung als Scharnieranordnung für eine Fronthaube des Fahrzeugs aufweist, wobei die Mehrgelenksanordnung wenigstens zwei Gelenkarme aufweist, die jeweils mit einer fronthaubenseitigen Anlenkstelle an einem fronthaubenseitigen Scharnierteil und mit einer karosserieseitigen Anlenkstelle an einem karosserieseitigen Scharnierteil angelenkt sind.

Konkret ist die Scharnieranordnung hier als Viergelenksanordnung ausgebildet, wobei das karosserieseitige Scharnierteil, an dem die karosserieseitigen Anlenkstellen ausgebildet sind, als Scharnierträger schwenkbar an der Fahrzeugkarosserie angelenkt ist. Dieser schwenkbar gelagerte Scharnierträger kann im Falle einer Kollision des Fahrzeugs mit einem Fußgänger über die Federanordnung nach oben verschwenkt werden. Zwar wird auch hier im Falle einer Kollision des Fahrzeugs mit einem Fußgänger der Abstand der Fronthaube zu den darunterliegenden Fahrzeugteilen erhöht, nachteilig ist jedoch auch hier, dass keine Energieabsorption mit einer gezielten Kraft-/Weg-Kennung möglich ist. Insbesondere besteht durch die Federanordnung dabei die Gefahr, dass die Fronthaube nach einem ersten Absenken wieder nach oben zurückfedert. Dadurch kann der Aufprall in unerwünschter Weise unkontrolliert ablaufen. Ein bestimmtes Beschleunigungs-Zeit-Verhalten für den aufprallenden Fußgänger verbunden mit einer gezielten Aufprallenergieabsorption kann somit auch hier nicht erzielt werden.

Ein ähnlicher Aufbau mit einer Federanordnung, der die eben genannten Nachteile aufweist, ist auch aus der FR-A 27 72 700 bekannt, bei dem die Fronthauben-Scharnieranordnung bei einem Fußgängeraufprall durch eine Federanordnung aus der Ruhestellung in die Aufprallposition angehoben wird.

Eine Sicherheitseinrichtung mit einer Energieabsorptionsmöglichkeit ist aus der DE-OS-2841315 bekannt, bei der über eine Zylinder-Kolben-Einheit im Falle einer sensierten Kollision des Fahrzeugs mit einem Fußgänger die Fronthaube angehoben wird. Zur Engergieabsorption ist hier ein Energieabsorptionselement vorgesehen, das aus in einer Umfangsnut des Kolbens angeordneten Kugeln besteht, die bei einer durch den Aufschlag des Fußgängers auf die angehobene Fronthaube bewirkten Rückbewegung des Kolbens an einer konisch verlaufenden Auflauframpe des Kolbens auflaufen und eine Klemmung des Kolbens in dem Zylinder bewirken sollen. Eine Energieabsorption ist mit einem derartigen Aufbau allerdings nur schlecht oder unzuverlässig möglich, da die Kugeln einerseits den Kolbenhub bei einer Aufwärtsbewegung des Kolbens nicht behindern sollen, andererseits aber eine Abwärtsbewegung des Kolbens blockieren sollen, was technisch nur schwer zu realisieren ist. Es besteht hier somit die Gefahr, dass hier die Kugeln bei der Abwärtsbewegung des Kolbens nicht entlang der Auflauframpe auflaufen, so dass die Abwärtsbewegung des Kolbens im Zylinder nicht behindert und damit auch keine Energieabsorption erzielt wird.

Insgesamt sind derartige Sicherheitseinrichtungen daher als wenig geeignet für den praktischen Einsatz anzusehen.

Aufgabe der Erfindung ist es daher, eine Sicherheitseinrichtung an einem Fahrzeug zum Schutz von Fußgängern zu schaffen, die bei einem Fußgängeraufprall eine Energieabsorption mit gezielter Kraft-/Weg-Kennung ermöglicht.

Diese Aufgabe wird gelöst mit den Merkmalen des Anspruchs 1.

Gemäß Anspruch 1 ist wenigstens eine der fronthaubenseitigen und/oder karosserieseitigen Anlenkstellen mit einem Deformationselement gekoppelt dergestalt, dass die Fronthaube bei einem Fußgängeraufprall relativ zur Fahrzeugkarosserie unter Energieabsorption durch das Deformationselement gezielt nach unten absenkbar ist.

Durch diese Kopplung wenigstens einer der fronthaubenseitigen und/oder karosserieseitigen Anlenkstellen der Mehrgelenksanordnung mit einem Deformationselement wird bei einem Fußgängeraufprall auf die Fronthaube vorteilhaft eine gezielte Energieabsorption durch eine gezielte Deformation des Deformationselementes möglich. Insbesondere kann durch den Einsatz des Deformationselementes eine Energieabsorption mit einer gezielten Kraft-/Weg-Kennung eingestellt werden. Dadurch kann mit einem derartigen Aufbau der Sicherheitseinrichtung durch die gezielte Krafteinleitung und -umleitung im Falle eines Aufpralls auch ein bestimmtes Beschleunigungs-Zeit-Verhalten des aufprallenden Fußgängers und damit eine kontrollierte Aufprallenergieabsorption erzielt werden. Insgesamt kann somit hier die Wucht eines Aufpralls gezielt und kontrolliert aufgefangen werden.

Zudem kann die erfindungsgemäße Sicherheitseinrichtung auch auf vielfältige Weise ausgebildet werden und daher auch auf einfache Weise an unterschiedliche fahrzeugspezifische Einbausituationen angepasst werden. Durch diese einfache Anpassbarkeit einer erfindungsgemäßen Mehrgelenksanordnung an unterschiedliche fahrzeugspezifische Einbausituationen ist ein derartiger Aufbau insbesondere für den Einsatz in einer Großserienfertigung, wie dies beim Automobilbau der Fall ist, geeignet, da sich hiermit Sicherheitseinrichtungen realisieren lassen, die neben der Möglichkeit der gezielten Energieabsorption aufgrund der großen Variationsmöglichkeiten auch auf einfache und preiswerte Weise herstellbar sind.
Zudem erfordert ein derartiger Aufbau einer Sicherheitseinrichtung lediglich einfache Schwenklager, so dass die erfindungsgemäße Sicherheitseinrichtung bei guter Funktion einfach und kostengünstig herstellbar ist, wobei die Mehrgelenksanordnung zudem mechanisch unempfindlich ist und eine Fronthaube mit guter Öffnungskinematik zur Verfügung stellt.

Insgesamt kann mit einer derartig aufgebauten Sicherheitseinrichtung somit eine stabile Halterung und Führung der Fronthaube erreicht werden, wobei eine derartige Mehrgelenksanordnung vorzugsweise zu beiden Seiten des Fahrzeugs, vorzugsweise in einem hinteren Vorderwagenbereich, angeordnet ist.

Um einen ausreichenden Abstand zwischen der Fronthaube zu darunterliegenden, nicht deformierbaren Fahrzeugteilen, wie z. B. einer Brennkraftmaschine, zu schaffen, kann die Fronthaube dabei in einer ersten Ausführungsform bereits von vorneherein mit einem ausreichenden Abstand über diesen Fahrzeugteilen angeordnet sein. Dazu kann die Fronthaube in einer Fronthauben-Ruhestellung mit dem fronthaubenseitigen Scharnierteil beabstandet oberhalb dem karosserieseitigen Scharnierteil angeordnet sein.

Alternativ oder zusätzlich dazu kann auch vorgesehen sein, dass bei einem Fußgängeraufprall zur Schaffung eines ausreichenden Deformationsabstandes der Fronthaube zu darunterliegenden, nicht deformierbaren Fahrzeugteilen, die Fronthaube mittels eines durch eine Sensorvorrichtung aktivierbaren Energiespeichers aus einer Fronthauben-Ruheposition in eine diesergegenüber angehobene Fronthauben-Aufprallposition angehoben werden kann. Die Sensorvorrichtung kann dabei im Fahrzeugfrontbereich angeordnet sein, um eine drohende oder eine erfolgte Kollision mit einem Fußgänger zu erfassen.

In einer bevorzugten Ausführungsform umfaßt jede mit dem Deformationselement gekoppelte Anlenkstelle eine Kulissenanordnung mit einer Führungskulisse, in der ein Führungszapfen des entsprechend zugeordneten Gelenkarms verschiebbar geführt ist. Ein derartiger Aufbau einer Anlenkstelle ist bei guter Funktionssicherheit einfach und kostengünstig herzustellen und gewährleistet zudem, dass ein Deformationselement auf vielfältige Weise mittelbar oder unmittelbar mit der jeweiligen Anlenkstelle gekoppelt werden kann.

So kann in einer bevorzugten Ausführungsform in Verbindung mit einer derartigen Kulissenanordnung vorgesehen sein, dass der Führungszapfen bei einem Fußgängeraufprall auf die Fronthaube gegen den Widerstand des Deformationselementes unter Energieabsorption in der Führungskulisse so verschiebbar ist, dass die Fronthaube gezielt nach unten absenkbar ist. Mit einem derartigen einfachen Aufbau ergibt sich eine vorteilhaft günstige Krafteinleitung und Kraftumleitung für eine Energieabsorption mit gezielter Kraft-/Weg-Kennung.

Die Führungskulisse ist hier in einer konkreten ersten Ausführungsform schlitzförmig mit einem Verjüngungsbereich ausgebildet, so dass der Führungszapfen in einer Normalstellung in einem weiten Bereich der Führungskulisse vorzugsweise formschlüssig aufgenommen ist. Bei einem Fußgängeraufprall auf die Fronthaube ist der Führungszapfen vom weiten Bereich der Führungskulisse ausgehend unter Aufweitung der Führungskulisse und somit unter Energieabsorption in den Verjüngungsbereich der Führungskulisse verschiebbar. Ein derartiger Aufbau eines Deformationselementes ist bei guter Funktion einfach und kostengünstig herzustellen.

In einer dazu alternativen Ausführungsform ist die Führungskulisse schlitzförmig mit einem in den Innenbereich der Führungskulisse vorstehenden Nockenfortsatz ausgebildet. Der Führungszapfen ist in einer Normalstellung in einem weiten Bereich der Führungskulisse aufgenommen, vorzugsweise formschlüssig aufgenommen. Bei einem Fußgängeraufprall auf die Fronthaube als Aufprallsituation überfährt der Führungszapfen vom weiten Bereich der Führungskulisse ausgehend den Nockenfortsatz unter Aufweitung des den Nockenfortsatz aufweisenden Führungskulissenbereichs unter gleichzeitiger Energieabsorption. Auch ein derartiges Deformationselement ist bei guter Funktion einfach und preisgünstig herzustellen.

In einer weiteren alternativen Ausführungsform ist in der Führungskulisse benachbart zum Führungszapfen ein Stauchteil angeordnet, das in einer Aufprallsituation durch den in der Führungskulisse verschiebbaren Führungszapfen unter Energieabsorption stauchbar ist. Als Stauchteil kann zum Beispiel ein deformierbares ein- oder mehrteiliges Metall- und/oder Kunststoffelement vorgesehen sein.

In einer weiteren vorteilhaften Ausführungsform ist das freie Ende des Führungszapfens über Kraftübertragungsmittel mit einem Energiespeicher verbunden, wobei bei aktiviertem Energiespeicher der Führungszapfen in der Führungskulisse von einer Ausgangsstellung in eine Endstellung verschiebbar und ggf. der Führungszapfen und damit der zugeordnete Gelenkarm um die Führungszapfenachse verschiebbar ist. Dadurch können der zugeordnete Gelenkarm und durch die Mehrgelenksanordnung bedingt auch der wenigstens eine weitere Gelenkarm die Fronthaube aus einer Fronthauben-Ruheposition in eine Fronthauben-Aufprallposition anheben. Auch mit einem derartigen Aufbau ergibt sich eine vorteilhafte Krafteinleitung und Kraftumleitung für eine Energieabsorption mit gezielter Kraft-/Weg-Kennung.

In einer bevorzugten Ausführungsform hierzu ist der Energiespeicher als Zylinder-Kolben-Einheit ausgebildet, die aus einem Zylinder mit darin geführtem Kolben samt Kolbenstange besteht.

Das Kraftübertragungsmittel weist in einer ersten konkreten Ausführungsform ein Zugmittel-Umlenkelement auf, das unmittelbar oder mittelbar vorzugsweise mit dem freien Ende des Führungszapfens gekoppelt ist. Als Zugmittel-Umlenkelement ist beispielsweise eine Zugmittel-Umlenkrolle vorgesehen. Um dieses Zugmittel-Umlenkelement ist ein Zugmittel, vorzugsweise ein Seil oder eine Kette, wenigstens teilweise, bevorzugt in einer 180°-Umschlingung, geführt und mit einem Ende am karosserieseitigen Scharnierteil festgelegt. Das zweite Ende des Zugmittels ist dagegen mit einer Kolbenstange der Zylinder-Kolbeneinheit verbunden, so dass bei einer Aktivierung der Zylinder-Kolbeneinheit bei einem Fußgängeraufprall auf die Fronthaube die Kolbenstange mitsamt Kolben ausfährt und einen Zug auf das Zugmittel ausübt. Dadurch wird das Zugmittel-Umlenkelement um die Führungszapfenachse verschwenkt und gleichzeitig der Führungszapfen in der Führungskulisse verschoben, so dass der entsprechend zugeordnete Gelenkarm aufgeschwenkt wird.

Vorteilhaft kann bei einem solchen Aufbau bei einem Fußgängeraufprall die angehobene Fronthaube unter Energieabsorption durch Deformation wenigstens eines der Gelenkarme und/oder durch Zugmitteldeformation und/oder durch eine Drehdeformation des Führungszapfens als Wellenteil und/oder durch ein kraftbegrenztes Nachgeben des Kolbens der Zylinder-Kolbeneinheit gezielt nach unten absenkt werden. Für die Gelenkarmdeformation ist am Gelenkarm beispielsweise eine Solldeformationsstelle vorgesehen, die zum Beispiel durch eine Materialschwächung gebildet wird. Als Zugmitteldeformation eignet sich insbesondere eine Seildeformation, während beim kraftbegrenzten Nachgeben des Kolbens der Zylinder-Kolben-Einheit vorzugsweise ein Gas oder Fluid komprimiert und gezielt aus dem Zylinder ausgeblasen oder abgeführt wird. Kombinationen der einzelnen Deformationsmöglichkeiten sind grundsätzlich möglich und können entsprechend der jeweiligen Einbausituation gewählt werden.

Alternativ dazu kann das Kraftübertragungsmittel ein erstes Zahnstangenelement umfassen, das mittelbar oder unmittelbar vorzugsweise mit dem freien Ende des Führungszapfens gekoppelt ist. Das erste Zahnstangenelement kämmt mit einem karosserieseitig angeordneten zweiten Zahnstangenelement. Dieses zweite Zahnstangenelement ist vorzugsweise am karosserieseitigen Scharnierteil angeordnet. Das erste Zahnstangenelement ist mit der Kolbenstange der Zylinder-Kolbeneinheit verbunden, vorzugsweise schwenkbar an der Kolbenstange angelenkt. Dadurch fährt die Kolbenstange bei einer Aktivierung der Zylinder-Kolbeneinheit bei einem Fußgängeraufprall aus und verschwenkt das erste Zahnstangenelement und damit den Führungszapfen um die Führungszapfenachse, wobei gleichzeitig auch der Führungszapfen in der Führungskulisse verschoben wird, so dass der zugeordnete Gelenkarm und damit die Fronthaube in die Aufprallposition aufgeschwenkt werden. Um die Verschwenkbewegung des ersten Zahnstangenelements durchführen zu können, kann es für bestimmte Einbausituationen erforderlich sein, den Zylinder ebenfalls schwenkbar an der Karosserie anzulenken.

Vorteilhaft kann auch hier bei einem Fußgängeraufprall die angehobene Fronthaube wieder unter Energieabsorption durch z.B. Drehdeformation des Führungszapfens und/oder Zahndeformation der ineinandergreifenden Zähne und/oder kraftbegrenztes Nachgeben des Kolbens der Zylinder-Kolben-Einheit gezielt nach unten abgesenkt werden.

Grundsätzlich kann die Führungskulisse jede für die bestimmte Einbausituation geeignete Form aufweisen, zum Beispiel ansteigend ausgebildet sein. In einer bevorzugten Ausführungsform ist die Führungskulisse in etwa waagrecht angeordnet, wobei mit dem Zugmittel-Umlenkelement oder dem Zahnstangenelement eine Stützschiene, zum Beispiel über den Führungszapfen, gekoppelt ist. Die Stützschiene wirkt wiederum mit dem zugeordneten Gelenkarm zusammen, so dass die Stützschiene bei einem Verschwenken des Zugmittel-Umlenkelements den Gelenkarm nach oben mitnimmt und aufschwenkt. Eine derartige Maßnahme gewährleistet eine hohe Funktionssicherheit.

In einer weiteren bevorzugten Ausführungsform ist die Fronthaube mittels einer pyrotechnisch zündbaren Zylinder-Kolben-Einheit als Energiespeicher anhebbar, deren Kolbenstange auf einen Gelenkarm der Mehrgelenkanordnung einwirkt, vorzugsweise über eine formschlüssige Paarung am Gelenkarm und an der Kolbenstange.

In einer bevorzugten Ausführungsform ist die Fronthaube weiter mittels einer Gasfederanordnung aus der Fronthauben-Ruhestellung in eine Fronthauben-Offenstellung verschwenkbar. Eine derartige Gasfederanordnung erlaubt eine gedämpfte und kraftsparende Öffnung der Fronthaube in einer Nichtaufprallsituation.

Die Mehrgelenksanordnung ist vorzugsweise zu beiden Seiten des Fahrzeugs als Viergelenksanordnung mit einem hinteren und einem vorderen Gelenkarm ausgebildet, wobei die Viergelenksanordnung an einem hinteren Vorderwagenbereich des Fahrzeugs ausgebildet ist. Für ein gezieltes Verschwenken der Fronthaube mit einer günstigen Öffnungskinematik ist ferner vorgesehen, dass der hintere Gelenkarm kürzer ausgebildet ist als der vordere Gelenkarm.

Zudem kann in einer weiteren bevorzugten Ausführungsform vorgesehen sein, dass der den Kotflügel bildende Karosseriebereich wenigstens im oberen fronthaubennahen Kotflügelbereich, vorzugsweise an einer Innenseite, als Deformationsteil ausgebildet ist. Dadurch wird erreicht, dass der als Deformationsteil ausgebildete Karosseriebereich bei einem Fußgängeraufprall auf die Fronthaube unter gezielter Energieabsorption durch Stauchung und/oder Knicken und/oder Faltung aus einer undeformierten Normalstellung in eine deformierte Deformationsstellung überführbar ist. Mit einem derartigen Aufbau des fronthaubennahen Kotflügelbereichs als Deformationsteil wird zudem erreicht, dass der zur Energieabsorption insgesamt zur Verfügung stehende Aufprallbereich weiter vergrößert wird.

Die Erfindung wird anhand einer Zeichnung näher erläutert.

Es zeigen:
- Fig. 1a-1e: schematische Seiten- und Vorderansichten einer ersten Ausführungsform der erfindungsgemäßen Sicherheitseinrichtung,
- Fig. 2a-2e: schematische Seiten- und Vorderansichten einer zweiten Ausführungsform der erfindungsgemäßen Sicherheitseinrichtung,
- Fig. 2f-2g: jeweils unterschiedliche Ausführungsformen eines Deformationselementes einer Sicherheitseinrichtung,
- Fig. 3a-3e: schematische Seiten- und Vorderansichten sowie Draufsichten auf eine dritte Ausführungsform der erfindungsgemäßen Sicherheitseinrichtung,
- Fig. 4a-4e: schematische Seiten- und Vorderansichten sowie Draufsichten auf eine vierte Ausführungsform der erfindungsgemäßen Sicherheitseinrichtung, und
- Fig. 5: eine schematische Seitenansicht einer fünften Ausführungsform der erfindungsgemäßen Sicherheitseinrichtung.

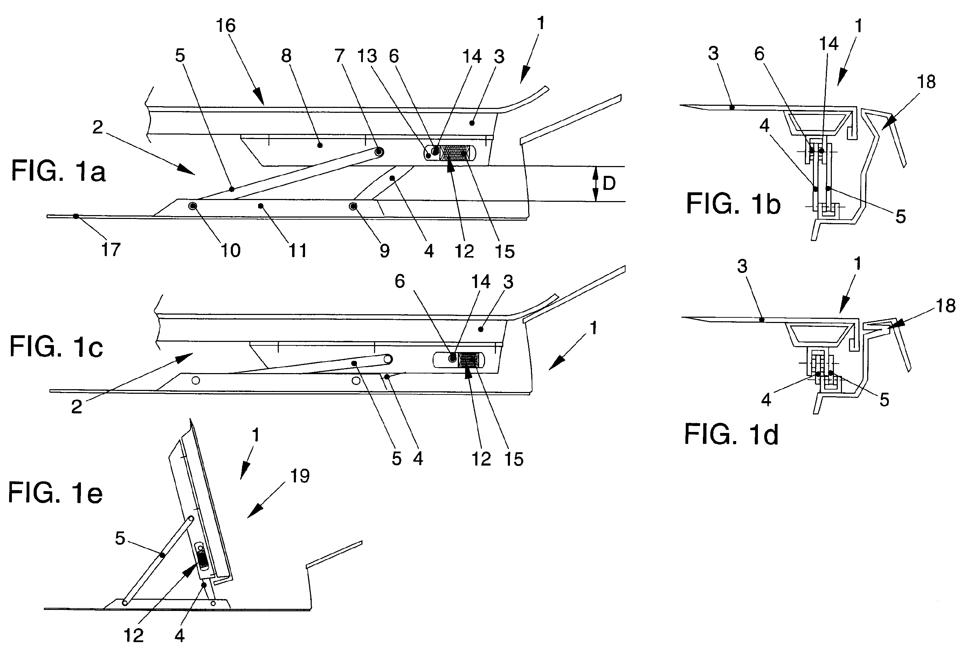

In der Fig. 1a ist schematisch eine Seitenansicht einer Sicherheitseinrichtung 1 an einem Fahrzeug zum Schutz von Fußgängern dargestellt. In der Fig. 1b ist eine Vorderansicht der Sicherheitseinrichtung 1 gemäß Fig. 1a dargestellt. Die Sicherheitseinrichtung 1 umfaßt eine als Viergelenksanordnung 2 ausgebildete Scharnieranordnung für eine Fronthaube 3 des Fahrzeugs. Diese Viergelenksanordnung 2 umfaßt einen hinteren Gelenkarm 4 und einen vorderen Gelenkarm 5, die jeweils mit einer fronthaubenseitigen Anlenkstelle 6, 7 an einem fronthaubenseitigen Scharnierteil 8 und mit einer karosserieseitigen Anlenkstelle 9, 10 an einem karosserieseitigen Scharnierteil 11 angelenkt sind. Das karosserieseitige Scharnierteil 11 ist hier beispielsweise auf einer Kotflügelbank angeordnet, wie dies insbesondere aus den Fig. 1b und 1d ersichtlich ist.

Wie dies aus der Fig. 1a weiter ersichtlich ist, ist die fronthaubenseitige Anlenkstelle 6 des hinteren Gelenkarms 4 ferner mit einem hier lediglich schematisch dargestellten Deformationselement 12 gekoppelt. Die Anlenkstelle 6 umfaßt eine Kulissenanordnung mit einer Führungskulisse 13, in der ein Führungszapfen 14 verschiebbar geführt ist. Der Führungszapfen 14 ist integral an der fronthaubenseitigen Anlenkstelle 6 ausgebildet, was insbesondere aus Fig. 1b ersichtlich ist. Weiter ist in der Führungskulisse 13 benachbart zum Führungszapfen 14 ein Stauchteil 15 angeordnet.

Wie dies insbesondere wiederum aus Fig. 1b ersichtlich ist, befindet sich die Fronthaube 3 in der Darstellung der Figuren 1a und 1b in einer Fronthauben-Ruheposition 16, bei der die Fronthaube bereits in einem ausreichend großen Abstand über einer Karosserieebene 17 liegt. Auf Höhe dieser Karosserieebene 17 sind in etwa die Oberseiten der undeformierbaren Funktionsteile, wie zum Beispiel eine Brennkraftmaschine, angeordnet, was hier allerdings nicht dargestellt ist. Beispielsweise beträgt hier der Abstand D zwischen den einander zugewandten Seitenflächen des karosserieseitigen Scharnierteils 11 und des fronthaubenseitigen Scharnierteils 8 in etwa 80 mm.

Bei einem Fußgängeraufprall auf die Fronthaube 3 kann die Fronthaube 3 unter Energieabsorption durch das Deformationselement 12 gezielt nach unten abgesenkt werden, wie dies in Fig. 1c in einer Seitenansicht und in Fig. 1d in einer Vorderansicht schematisch dargestellt ist. Bei einem derartigen Fußgängeraufprall auf die Fronthaube 3 wird, wie dies insbesondere aus der Fig. 1c ersichtlich ist, der Führungszapfen 14 gegen den Widerstand des Stauchteils 15 und damit unter Energieabsorption in der Führungskulisse 13 in Richtung des hinteren Vorderwagenbereichs verschoben, wodurch die Fronthaube 3 unter Energieabsorption gezielt nach unten abgesenkt wird. Dadurch ist eine Energieabsorption mit einer gezielten Kraft-/Weg-Kennung durch gezielte Krafteinleitung und Kraftumleitung möglich.

Wie dies aus der Fig. 1d weiter ersichtlich ist, kann bei einem derartigen Aufbau der Sicherheitseinrichtung 1 auch weiter vorteilhaft vorgesehen sein, dass der an die Fronthaube 3 bündig anschließende Karosseriebereich 18 vorzugsweise an einer Innenseite als Deformationselement ausgebildet ist, das bei einem Fußgängeraufprall unter Energieabsorption entsprechend zusammenfaltbar ist, wie dies insbesondere aus den Fig. 1b und 1d ersichtlich ist.

In der Fig. 1e ist schließlich eine Offenstellung 19 der Fronthaube 3 dargestellt in der zum Beispiel eine Brennkraftmaschine von außen frei zugänglich ist. Um eine günstige Öffnungskinematik der Viergelenksanordnung 2 zu erreichen, ist dabei der hintere Gelenkarm 4 kürzer ausgebildet als der vordere Gelenkarm 5.

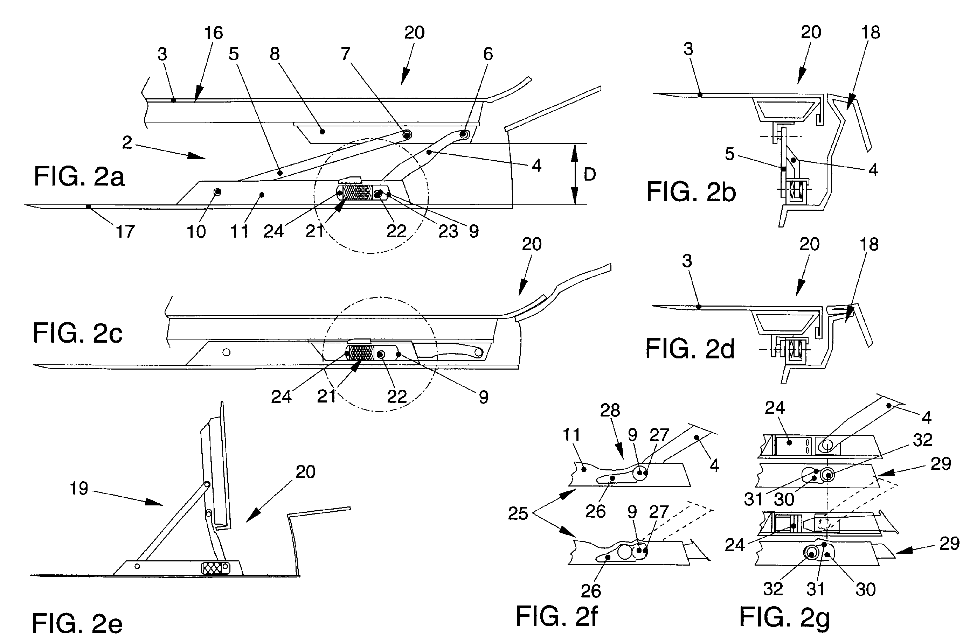

In den Fig. 2a bis 2e ist eine zweite Ausführungsform einer Sicherheitseinrichtung 20 schematisch dargestellt, wobei der Aufbau dieser Sicherheitseinrichtung 20 im wesentlichen derjenigen der Sicherheitseinrichtung 1 entspricht, so dass gleiche Teile mit gleichen Bezugszeichen versehen werden. Im Unterschied zur ersten Ausführungsform sind die Gelenkarme 4, 5 hier auf gleichen Seiten des fronthaubenseitigen Scharnierteils 8 angelenkt. Ein weiterer Unterschied zur Sicherheitseinrichtung 1 der Fig. 1a bis 1e liegt hier darin, dass ein Deformationselement 21 mit der karosserieseitigen Anlenkstelle 9 gekoppelt ist. Die Funktionsweise dieser Sicherheitseinrichtung 20 entspricht derjenigen der Fig. 1a bis 1d mit dem Unterschied, dass bei einer Absenkung der Fronthaube 3 bei einem Fußgängeraufprall ein in einer Führungskulisse 23 geführter Führungszapfen 22 der Anlenkstelle 9 unter Energieabsorption durch Stauchung eines Stauchteils 24 in Richtung Fahrzeugfront verschoben wird.

In der Fig. 2f ist eine alternative Ausführungsform eines Deformationselementes 25 in unterschiedlichen Stellungen dargestellt. Das Deformationselement 25 ist hier schlitzförmig mit einem Verjüngungsbereich in einer Führungskulisse 26 ausgebildet, in dessen weiten Bereich ein Führungszapfen 27 in einer Normalstellung 28 formschlüssig aufgenommen ist. Bei einem Fußgängeraufprall wird dieser Führungszapfen 27 vom weiten Bereich der Führungskulisse 26 ausgehend unter Aufweitung der Führungskulisse 26 und damit unter gleichzeitiger Energieabsorption in den Verjüngungsbereich der Führungskulisse 26 verschoben.

In der Fig. 2g sind zwei unterschiedliche Ausführungsformen eines Deformationselementes dargestellt. Die eine entspricht der in Verbindung mit den Fig. 1a bis 1d und in Verbindung mit den Fig. 2a bis 2d geschilderten Ausbildung des Deformationselementes mit einem Stauchteil 24.

Bei der anderen Ausführungsform eines Deformationselementes 29 ist eine schlitzförmige Führungskulisse 30 mit einem in den Innenbereich der Führungskulisse 30 vorstehenden Nockenfortsatz 31 ausgebildet. Der Führungszapfen 32 ist in einer Normalstellung in einem weiten Bereich der Führungskulisse formschlüssig aufgenommen, so dass der Führungszapfen 32 bei einem Fußgängeraufprall auf die Fronthaube vom weiten Bereich der Führungskulisse 30 ausgehend den Nockenfortsatz 31 unter Energieabsorption und Aufweitung des dem Nockenfortsatz 31 aufweisenden Führungskulissenbereichs überfährt.

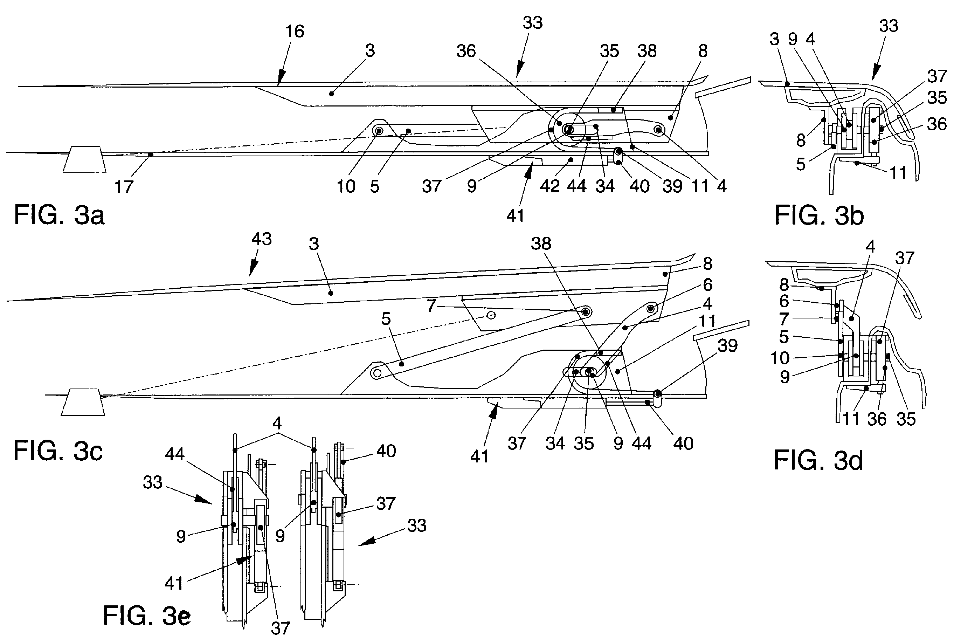

In den Fig. 3a bis 3e ist eine dritte Ausführungsform einer Sicherheitseinrichtung 33 schematisch in unterschiedlichen Ansichten und Zuständen dargestellt. Wie dies insbesondere aus der Fig. 3c ersichtlich ist, entspricht der grundsätzliche Aufbau der Sicherheitseinrichtung 33 hinsichtlich Viergelenksanordnung 2, Fronthaube 3, hinterem Gelenkarm 4, vorderen Gelenkarm 5 sowie hinsichtlich der frontseitigen Anlenkstellen 6, 7 an dem fronthaubenseitigen Scharnierteil 8 und den karosserieseitigen Anlenkstellen 9, 10 am karosserieseitigen Scharnierteil 11 demjenigen der ersten beiden Ausführungsformen, wie diese in den Fig. 1a bis 1e und in den Fig. 2a bis 2e beschrieben und dargestellt sind, so dass hierauf nicht mehr näher im Detail eingegangen wird.

Im Unterschied zu diesen Ausführungsformen ist, wie dies insbesondere auch aus der Fig. 3a ersichtlich ist, der karosserieseitigen Anlenkstelle 9 des hinteren Gelenkarms 4 wiederum eine Kulissenanordnung mit einer Führungskulisse 34 und einem darin geführten Führungszapfen 35 zugeordnet, wobei das freie Ende des Führungszapfens 35 mit einer Seilumlenkrolle 36 gekoppelt ist, was insbesondere aus der Fig. 3b ersichtlich ist.

Um diese Seilumlenkrolle 36 ist ein Seil 37 in etwa in einer 180°-Umschlingung geführt und mit einem ersten Seilende 38 am karosserieseitigen Scharnierteil 11 festgelegt. Das zweite Seilende 39 ist dagegen mit einer Kolbenstange 40 einer Zylinder-Kolben-Einheit 41 verbunden.

In der Fig. 3a ist die Sicherheitseinrichtung 33 in der Fronthauben-Ruheposition 16 in einer Seitenansicht und in der Fig. 3b in einer Vorderansicht schematisch dargestellt.

Die Sicherheitseinrichtung 33 umfaßt ferner eine im Fahrzeugfrontbereich angeordnete und hier nicht dargestellte Sensorvorrichtung zur Erfassung einer drohenden oder erfolgten Kollision mit einem Fußgänger. Mittels dieser Sensorvorrichtung ist die Zylinder-Kolben-Einheit 41 bei einem Fußgängeraufprall aktivierbar, wobei die Kolbenstange 40 mitsamt Kolben, der hier nicht dargestellt ist, aus einem karosserieseitig festgelegten Zylinder 42 der Zylinder-Kolben-Einheit 41 ausfährt und einen Zug auf das Seil 37 ausübt, wodurch die Seilumlenkrolle 36 um die Führungszapfenachse verschwenkt wird und der Führungszapfen 35 ferner in der Führungskulisse 34 nach hinten in Richtung hinterer Vorderwagenbereich verschoben wird. Dadurch wird der hintere Gelenkarm 4 und durch die Viergelenksanordnung 2 bedingt auch der vordere Gelenkarm 5 nach oben aufgeschwenkt und die Fronthaube 3 aus der in den Fig. 3a und 3b dargestellten Fronthauben-Ruheposition 16 in die in den Fig. 3c und 3d in unterschiedlichen Ansichten dargestellte Fronthauben-Aufprallposition 43 angehoben.

Da die Führungskulisse 34 im wesentlichen waagrecht angeordnet ist, ist mit der Seilumlenkrolle 36 über den Führungszapfen 35 eine Stützschiene 44 gekoppelt, die wiederum mit dem hinteren Gelenkarm 4 so zusammen wirkt, dass die Stützschiene 44 bei einem Verschwenken der Umlenkrolle den hinteren Gelenkarm 4 nach oben mitnimmt und aufschwenkt.

In der Fig. 3e ist jeweils eine Draufsicht auf die Anordnungen gemäß den Fig. 3a und 3c schematisch dargestellt.

Bei einem Fußgängeraufprall auf die angehobene Fronthaube 3 wird diese unter Energieabsorption zum Beispiel durch Deformation des Seils 37 oder aber auch durch zum Beispiel eine Drehdeformation des Führungszapfens 35 gegebenenfalls in Verbindung mit einem kraftbegrenztem Nachgeben des Kolbens der Zylinder-Kolben-Einheit 41 gezielt nach unten abgesenkt, was hier allerdings nicht dargestellt ist.

Für eine gedämpfte und kraftsparende Öffnung der Fronthaube 3 in einer Nichtaufprallsituation kann eine Gasfederanordnung vorgesehen sein, was hier allerdings allerdings nur schematisch mit strichpunktierter Linie dargestellt ist.

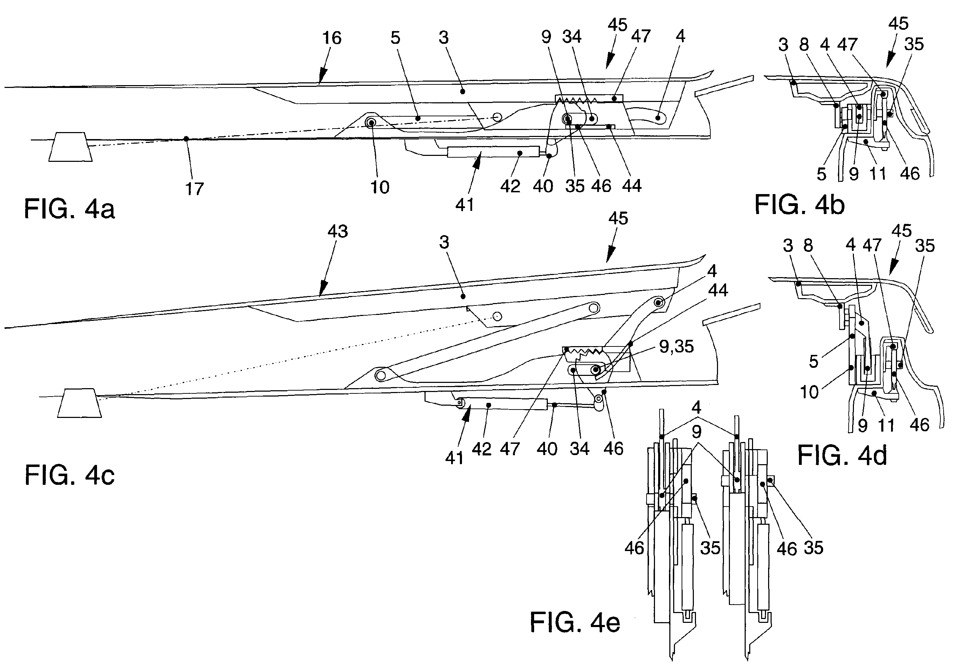

In den Fig. 4a bis 4e ist eine alternative Ausführungsform einer Sicherheitseinrichtung 45 dargestellt, die im wesentlichen derjenigen der Fig. 3a bis 3e entspricht, mit dem Unterschied, dass hier die Kolbenstange 40 mit einem ersten Zahnstangenelement 46 verbunden ist und schwenkbar an der Kolbenstange 40 angelenkt ist. Dieses erste Zahnstangenelement 46 ist ferner mit dem freien Ende des Führungszapfens 35 gekoppelt, was insbesondere aus der Fig. 4b ersichtlich ist, und kämmt mit einem karosserieseitig am karosserieseitigen Scharnierteil 11 angeordneten zweiten Zahnstangenelement 47.

Bei einer Aktivierung der Zylinder-Kolben-Einheit 41 bei einem Fußgängeraufprall fährt die Kolbenstange 40 aus, wobei das erste Zahnstangenelement 46 und damit der Führungszapfen 35 um die Führungszapfenachse unter gleichzeitiger Verschiebung des Führungszapfens 35 in der Führungskulisse 34 verschwenkt wird, so dass der hintere Gelenkarm 4 und damit die Fronthaube 3 in die Fronthauben-Aufprallposition 43 aufschwenkbar sind. Die Stützschiene 44, die mit dem ersten Zahnstangenelement 46 gekoppelt ist, unterstützt auch hier wieder das Aufschwenken des hinteren Gelenkarms 4. Damit das erste Zahnstangenelement 46 hier in der beschriebenen Weise verschwenkt und über den Führungszapfen 35 in der Führungskulisse 34 verschoben werden kann, ist ferner vorgesehen, dass der Zylinder 42 schwenkbar angelenkt ist.

Bei einem Fußgängeraufprall wird die angehobene Fronthaube 3 unter Energieabsorption durch zum Beispiel Drehdeformation des Führungszapfens 35 und/oder Deformation der ineinandergreifenden Zähne und/oder kraftbegrenztes Nachgeben des Kolbens der Zylinder-Kolben-Einheit 41 gezielt nach unten abgesenkt, was hier allerdings nicht dargestellt ist.

Die Zylinder-Kolben-Einheit 41 kann dabei pyrotechnisch gezündet werden.

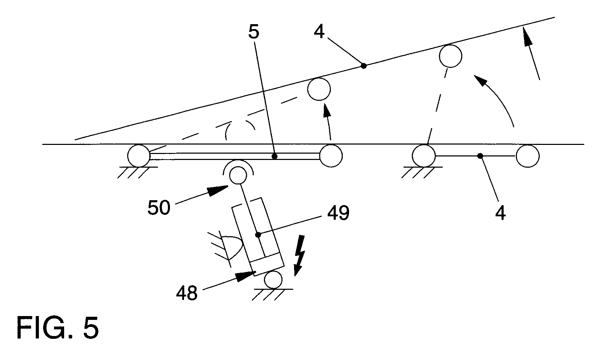

In der Fig. 5 ist ferner schematisch ein Aufbau dargestellt, der zeigt, dass die Fronthaube 3 mittels einer pyrotechnisch zündbaren Zylinder-Kolben-Einheit 48 angehoben werden kann, deren Kolbenstange 49 auf den vorderen Gelenkarm 5 der Viergelenksanordnung 2, vorzugsweise über eine formschlüssige Paarung 50 am vorderen Gelenkarm 5 und an der Kolbenstange 49, einwirkt. Grundsätzlich kann die Fronthaube dabei aber auch über eine reversible Federanordnung angehoben werden, wobei die Energieabsorption z. B. durch die Zylinder-Kolben-Einheit als Deformationselement erfolgt. Ein derartiger Aufbau kann in Verbindung mit den zuvor beschriebenen Ausführungsformen oder aber auch in Alleinstellung als Sicherheitseinrichtung verwendet werden.

### BEZUGSZEICHENLISTE

- D: Abstand
- 1: Sicherheitseinrichtung
- 2: Viergelenksanordnung
- 3: Fronthaube
- 4: hinterer Gelenkarm
- 5: vorderer Gelenkarm
- 6: fronthaubenseitige Anlenkstelle
- 7: fronthaubenseitige Anlenkstelle
- 8: fronthaubenseitiges Scharnierteil
- 9: karosserieseitige Anlenkstelle
- 10: karosserieseitige Anlenkstelle
- 11: karosserieseitiges Scharnierteil
- 12: Deformationselement
- 13: Führungskulisse
- 14: Führungszapfen
- 15: Stauchteil
- 16: Fronthauben-Ruheposition
- 17: Karosserieebene
- 18: Karosseriebereich
- 19: Offenstellung
- 20: Sicherheitseinrichtung
- 21: Deformationselement
- 22: Führungszapfen
- 23: Führungskulisse
- 24: Stauchteil
- 25: Deformationselement
- 26: Führungskulisse
- 27: Führungszapfen
- 28: Normalstellung
- 29: Deformationselement
- 30: Führungskulisse
- 31: Nockenfortsatz
- 32: Führungszapfen
- 33: Sicherheitseinrichtung
- 34: Führungskulisse
- 35: Führungszapfen
- 36: Zugmittel-Umlenkrolle
- 37: Seil
- 38: erstes Seilende
- 39: zweites Seilende
- 40: Kolbenstange
- 41: Zylinder-Kolben-Einheit
- 42: Zylinder
- 43: Fronthauben-Aufprallposition
- 44: Stützschiene
- 45: Sicherheitseinrichtung
- 46: erstes Zahnstangenelement
- 47: zweites Zahnstangenelement
- 48: Zylinder-Kolben-Einheit
- 49: Kolbenstange
- 50: formschlüssige Paarung

## Patentansprüche

1. Sicherheitseinrichtung an einem Fahrzeug zum Schutz von Fußgängern, mit einer Mehrgelenksanordnung als Scharnieranordnung für eine Fronhaube des Fahrzeugs, wobei die Mehrgelenksanordnung wenigstens zwei Gelenkarme aufweist, die jeweils mit einer fronthaubenseitigen Anlenkstelle an einem fronthaubenseitigen Scharnierteil und mit einer karosserieseitigen Anlenkstelle an einem karosserieseitigen Scharnierteil angelenkt sind, **dadurch gekennzeichnet**, dass wenigstens eine der fronthaubenseitigen und/oder karosserieseitigen Anlenkstellen (6, 7, 9, 10) mit einem Deformationselement (12; 21; 25; 29) gekoppelt ist dergestalt, dass die Fronthaube (3) bei einem Fußgängeraufprall relativ zur Fahrzeugkarosserie unter Energieabsorption durch das Deformationselement (12; 21; 25; 29) gezielt nach unten absenkbar ist.

2. Sicherheitseinrichtung nach Anspruch 1, **dadurch gekennzeichnet**, dass die Fronthaube (3) in einer Fronthauben-Ruhestellung (16) mit dem fronthaubenseitigen Scharnierteil (8) beabstandet oberhalb dem karosserieseitigen Scharnierteil (11) angeordnet ist.

3. Sicherheitseinrichtung nach Anspruch 1 oder 2, **dadurch gekennzeichnet**, dass im Fahrzeugfrontbereich eine Sensorvorrichtung zur Erfassung einer drohenden oder erfolgten Kollision mit einem Fußgänger angeordnet ist, und dass ein durch die Sensorvorrichtung aktivierbarer Energiespeicher (41) zur Verstellung einer Fronthaube (3) des Fahrzeugs aus einer Fronthauben-Ruheposition (16) in eine diesergegenüber angehobene Fronthauben-Aufprallposition (43) vorgesehen ist.

4. Sicherheitseinrichtung nach einem der Ansprüche 1 bis 3, **dadurch gekennzeichnet**, dass jede mit dem Deformationselement (12; 21; 25; 29) gekoppelte Anlenkstelle (6, 7, 9, 10) eine Kulissenanordnung mit einer Führungskulisse (13; 23; 26; 30; 34) umfaßt, in der ein Führungszapfen (14; 22; 27; 32; 35) des entsprechend zugeordneten Gelenkarms (4, 5) verschiebbar geführt ist.

5. Sicherheitseinrichtung nach Anspruch 4, **dadurch gekennzeichnet**, dass der Führungszapfen (14; 22; 27; 32; 35) bei einem Fußgängeraufprall auf die Fronthaube (3) gegen den Widerstand des Deformationselementes (12; 21; 25; 29) unter Energieabsorption in der Führungskulisse (13; 23; 26; 30; 34) verschiebbar ist.

6. Sicherheitseinrichtung nach Anspruch 5, **dadurch gekennzeichnet**, dass die Führungskulisse (26) schlitzförmig mit einem Verjüngungsbereich ausgebildet ist dergestalt, dass der Führungszapfen (27) in einer Normalstellung (28) im weiten Bereich der Führungskulisse (26) vorzugsweise formschlüssig aufgenommen ist, und dass der Führungszapfen (27) in einer Aufprallsituation vom weiten Bereich der Führungskulisse (26) ausgehend unter Aufweitung der Führungskulisse (26) und somit unter Energieabsorption in den Verjüngungsbereich der Führungskulisse (26) verschiebbar ist.

7. Sicherheitseinrichtung nach Anspruch 5, **dadurch gekennzeichnet**, dass die Führungskulisse (30) schlitzförmig mit einem in den Innenbereich der Führungskulisse (30) vorstehenden Nockenfortsatz (31) ausgebildet ist dergestalt, dass der Führungszapfen (32) in einer Normalstellung in einem weiten Bereich der Führungskulisse (30) vorzugsweise formschlüssig aufgenommen ist, und dass der Führungszapfen (32) in einer Aufprallsituation vom weiten Bereich der Führungskulisse (30) ausgehend den Nockenfortsatz (31) unter Aufweitung des den Nockenfortsatz (31) aufweisenden Führungskulissenbereichs und somit unter Energieabsorption überfährt.

8. Sicherheitseinrichtung nach Anspruch 5, **dadurch gekennzeichnet**, dass in der Führungskulisse (13; 23) benachbart zum Führungszapfen (14; 22) ein Stauchteil (15; 24) angeordnet ist, das in einer Aufprallsituation durch den in der Führungskulisse (13; 23) verschiebbaren Führungszapfen (14; 22) unter Energieabsorption stauchbar ist.

9. Sicherheitseinrichtung nach Anspruch 4, **dadurch gekennzeichnet**, dass der Führungszapfen (35) über Kraftübertragungsmittel (36, 37; 46, 47) mit einem Energiespeicher (41) verbunden ist dergestalt, dass bei aktiviertem Energiespeicher (41) der Führungszapfen (35) in der Führungskulisse (34) von einer Ausgangsstellung in eine Endstellung verschiebbar und ggf. der Führungszapfen (35) und damit der zugeordnete Gelenkarm (4) um die Führungszapfenachse verschwenkbar ist, so dass der zugeordnete Gelenkarm (4) und durch die Mehrgelenksanordnung (2) bedingt auch der wenigstens eine weitere Gelenkarm (5) die Fronthaube (3) aus einer Fronthauben-Ruheposition (16) in eine Fronthauben-Aufprallposition (43) anheben.

10. Sicherheitseinrichtung nach Anspruch 9, **dadurch gekennzeichnet**, dass der Energiespeicher eine Zylinder-Kolben-Einheit (41) ist.

11. Sicherheitseinrichtung nach Anspruch 10, **dadurch gekennzeichnet**, dass das Kraftübertragungsmittel ein Zugmittel-Umlenkelement (36), vorzugsweise eine Zugmittel-Umlenkrolle, aufweist, das unmittelbar oder mittelbar vorzugsweise mit dem freien Ende des Führungszapfens (35) gekoppelt ist, dass um das Zugmittel-Umlenkelement (36) ein Zugmittel (37), vorzugsweise ein Seil oder eine Kette, wenigstens teilweise, vorzugsweise in einer 180°-Umschlingung, geführt und mit einem Ende (38) am karosserieseitigen Scharnierteil (11) festlegbar ist, dass das zweite Ende (39) des Zugmittels (37) mit einer Kolbenstange (40) der Zylinder-Kolben-Einheit (41) verbunden ist dergestalt, dass bei einer Aktivierung der Zylinder-Kolben-Einheit (41) bei einem Fußgängeraufprall die Kolbenstange (40) mitsamt Kolben ausfährt und einen Zug auf das Zugmittel (37) ausübt, so dass zum Aufschwenken des zugeordneten Gelenkarms (4) das Zugmittel-Umlenkelement (36) um die Führungszapfenachse verschwenkbar und der Führungszapfen (35) in der in etwa waagrecht ausgerichteten Führungskulisse (34) verschiebbar ist.

12. Sicherheitseinrichtung nach Anspruch 11, **dadurch gekennzeichnet**, dass bei einem Fußgängeraufprall auf die angehobene Fronthaube (3) unter Energieabsorption durch Deformation wenigstens eines der Gelenkarme (4, 5), vorzugsweise eines hinteren Gelenkarms (4) vorzugsweise an einer Solldeformationsstelle, und/oder durch Zugmitteldeformation, vorzugsweise Seildeformation, und/oder Drehdeformation des Führungszapfens (35) und/oder kraftbegrenztes Nachgeben des Kolbens der Zylinder-Kolben-Einheit (41) gezielt nach unten absenkbar ist.

13. Sicherheitseinrichtung nach Anspruch 10, **dadurch gekennzeichnet**, dass das Kraftübertragungsmittel ein erstes Zahnstangenelement (46) umfaßt, das unmittelbar oder mittelbar vorzugsweise mit dem freien Ende des Führungszapfens (35) gekoppelt ist, dass das erste Zahnstangenelement (46) mit einem karosserieseitig, vorzugsweise am karosserieseitigen Scharnierteil (11), angeordneten zweiten Zahnstangenelement (47) kämmt, dass das erste Zahnstangenelement (46) mit der Kolbenstange (40) der Zylinder-Kolben-Einheit (41) verbunden ist, vorzugsweise schwenkbar an der Kolbenstange (40) angelenkt ist dergestalt, dass bei einer Aktivierung der Zylinder-Kolben-Einheit (41) bei einem Fußgängeraufprall die Kolbenstange (40) ausfährt und so das erste Zahnstangenelement (46) und damit den Führungszapfen (35) um die Führungszapfenachse unter gleichzeitiger Verschiebung des Führungszapfens (35) in der in etwa waagrecht ausgerichteten Führungskulisse (34) verschwenkt, so dass der zugeordnete Gelenkarm (4) und damit die Fronthaube (3) in die Aufprallposition (43) aufschwenkbar sind.

14. Sicherheitseinrichtung nach Anspruch 13, **dadurch gekennzeichnet**, dass bei einem Fußgängeraufprall die angehobene Fronthaube (3) unter Energieabsorption durch Drehdeformation des Führungszapfens (35) und/oder Zahndeformation der ineinandergreifenden Zähne und/oder kraftbegrenztes Nachgeben des Kolbens der Zylinder-Kolben-Einheit (41) gezielt nach unten absenkbar ist.

15. Sicherheitseinrichtung nach einem der Ansprüche 10 bis 14, **dadurch gekennzeichnet**, dass die Führungskulisse (34) in etwa waagrecht angeordnet ist, dass mit dem Zugmittel-Umlenkelement (36) oder dem Zahnstangenelement (46) eine Stützschiene (44), vorzugsweise über den Führungszapfen (35), gekoppelt ist, die wiederum mit dem zugeordneten Gelenkarm (4) zusammenwirkt dergestalt, dass die Stützschiene (44) bei einem Verschwenken des Zugmittel-Umlenkelements (36) den Gelenkarm (4) nach oben mitnimmt und aufschwenkt.

16. Sicherheitseinrichtung nach einem der Ansprüche 3 bis 15, **dadurch gekennzeichnet**, dass die Fronthaube (3) mittels einer pyrotechnisch zündbaren Zylinder-Kolben-Einheit (48) als Energiespeicher anhebbar ist, deren Kolbenstange (49) auf einen Gelenkarm (4) der Mehrgelenkanordnung (2) einwirkt, vorzugsweise über eine formschlüssige Paarung (50) am Gelenkarm (5) und an der Kolbenstange (49).

17. Sicherheitseinrichtung nach einem der Ansprüche 1 bis 16, **dadurch gekennzeichnet**, dass die Fronthaube (3) mittels einer Gasfederanordnung aus der Fronthauben-Ruhestellung (16) in eine Fronthauben-Offenstellung (19) verschwenkbar ist.

18. Sicherheitseinrichtung nach einem der Ansprüche 1 bis 17, **dadurch gekennzeichnet**, dass die Mehrgelenksanordnung vorzugsweise zu beiden Seiten des Fahrzeugs, als Viergelenksanordnung (2) mit einem hinteren und einem vorderen Gelenkarm (4, 5) ausgebildet ist, und dass die Viergelenksanordnung (2) an einem hinteren Vorderwagenbereich des Fahrzeugs ausgebildet ist.

19. Sicherheitseinrichtung nach Anspruch 18, **dadurch gekennzeichnet**, dass der hintere Gelenkarm (4) für ein gezieltes Verschwenken der Fronthaube (3) kürzer ist als der vordere Gelenkarm (5).

20. Sicherheitseinrichtung nach einem der Ansprüche 1 bis 19, **dadurch gekennzeichnet**, dass der den Kotflügel bildende Karosseriebereich (18) wenigstens im oberen fronthaubennahen Kotflügelbereich, vorzugsweise an einer Innenseite, als Deformationsteil ausgebildet ist dergestalt, dass der als Deformationsteil ausgebildete Karosseriebereich (18) bei einem Fußgängeraufprall auf die Fronthaube (3) unter gezielter Energieabsorption durch Stauchung und/oder Knicken und/oder Faltung aus einer undeformierten Normalstellung in eine deformierte Deformationsstellung überführbar ist.
